(19) Europäisches Patentamt
European Patent Office
Office européen des brevets

(11) **EP 4 020 630 A1**

(12) **EUROPEAN PATENT APPLICATION**
published in accordance with Art. 153(4) EPC

(43) Date of publication:
**29.06.2022 Bulletin 2022/26**

(21) Application number: **20854029.4**

(22) Date of filing: **13.08.2020**

(51) International Patent Classification (IPC):
$H01M\ 4/36$ (2006.01)    $H01M\ 4/525$ (2010.01)
$H01M\ 4/505$ (2010.01)    $H01M\ 4/62$ (2006.01)
$H01M\ 10/052$ (2010.01)    $C01G\ 53/00$ (2006.01)
$C01B\ 35/12$ (2006.01)

(52) Cooperative Patent Classification (CPC):
C01B 35/12; C01G 53/00; H01M 4/36; H01M 4/505;
H01M 4/525; H01M 4/62; H01M 10/052;
Y02E 60/10

(86) International application number:
**PCT/KR2020/010795**

(87) International publication number:
**WO 2021/034020 (25.02.2021 Gazette 2021/08)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **22.08.2019 KR 20190102918**

(71) Applicants:
• **POSCO**
  **Pohang-si, Gyeongsangbuk-do 37859 (KR)**

• **RESEARCH INSTITUTE OF INDUSTRIAL
SCIENCE &
TECHNOLOGY
Pohang-si, Gyeongsangbuk-do 37673 (KR)**
• **POSCO Chemical Co., Ltd
Gyeongsangbuk-do 37918 (KR)**

(72) Inventors:
• **NAM, Sang Cheol**
  **Seoul 02587 (KR)**
• **CHOI, Kwon Young**
  **Seoul 07987 (KR)**

(74) Representative: **Potter Clarkson
The Belgrave Centre
Talbot Street
Nottingham NG1 5GG (GB)**

(54) **CATHODE ACTIVE MATERIAL, PREPARATION METHOD THEREFOR AND LITHIUM SECONDARY BATTERY COMPRISING SAME**

(57) The present exemplary embodiments relate to a cathode active material, a manufacturing method thereof, and a lithium secondary battery including the same. A cathode active material according to an exemplary embodiment is a lithium metal oxide particle in the form of a secondary particle including a primary particle, a coating layer including a boron compound is positioned on at least a portion of a surface of the primary particle, and the boron compound includes an amorphous structure.

FIG. 1

**EP 4 020 630 A1**

**Description**

**[Technical Field]**

The present invention relates to a cathode active material, a manufacturing method thereof, and a lithium secondary battery including the same.

**[Background Art]**

Recently, with an explosive increase in demand for IT mobile devices and small electric power devices (e-bikes, small EVs, etc.) and due to demand for electric vehicles with a driving distance of 400 km or more, development of secondary batteries with high capacity and high energy density to drive them is being actively pursued worldwide.
A high power characteristic according to rapid acceleration is important particularly for the electric vehicles among them. Conventionally, in order to manufacture such a high power battery, research has been mainly conducted to improve performance of an anode active material, but recently, research to improve an output characteristic of a cathode active material is also active. The above information disclosed in this Background section is only for enhancement of understanding of the background of the invention, and therefore it may contain information that does not form the prior art that is already known in this country to a person of ordinary skill in the art.

**[Disclosure]**

**[Technical Problem]**

The present exemplary embodiments have been made in an effort to provide a cathode active material having an advantage of greatly improving the output characteristic of a lithium secondary battery by coating a surface of a primary particle with a lithium ion conductive material.

**[Technical Solution]**

A cathode active material according to an exemplary embodiment is a lithium metal oxide particle in the form of a secondary particle including a primary particle, a coating layer including a boron compound is positioned on at least a portion of a surface of the primary particle, and the boron compound may include an amorphous structure.
A method for manufacturing a cathode active material according to another exemplary embodiment includes preparing a coating layer forming material including a boron compound, obtaining a metal precursor by adding an aqueous metal salt solution in a co-precipitation reactor, and obtaining a cathode active material by mixing and firing the coating layer forming material, the metal precursor, and a lithium raw material, and the coating layer forming material is provided as a particulate powder, and an average particle diameter of the coating layer forming material including the boron compound may be in the range of 0.3 $\mu$m to 1 $\mu$m.

**[Advantageous Effects]**

According the cathode active material to the present exemplary embodiment, since a coating layer including a boron compound having lithium ion conductivity is positioned on the surface of a primary particle, it is possible to significantly improve the output characteristic of a lithium secondary battery to which it is applied.
In addition, according to the present exemplary embodiment, since particle hardness of the cathode active material is increased, side reactions with an electrolyte solution may be suppressed, and thus thermal stability may be improved, thereby significantly improving the high temperature lifespan and high temperature increase rate characteristic.

**[Description of the Drawings]**

FIG. 1 is a schematic diagram of a portion of a secondary particle according to an embodiment of the present invention.
FIG. 2 illustrates an XRD measurement result of $Li_3BO_3$, which is an example of a boron compound forming a coating layer. 도2은 코팅층을 형성하는 보론 화합물의 일 예인 $Li_3BO_3$에 대
FIG. 3A shows a cross-sectional analysis result for a cathode active material prepared in Exemplary Embodiment 1.
FIG. 3B illustrates an EELS analysis result for a primary particle surface part in FIG. 3A.

FIG. 3C is an enlarged view of a part of the spectrum of a boron detection region in FIG. 3B.

FIG. 4A shows a cross-sectional analysis result for a cathode active material prepared in Comparative Example 4.

FIG. 4B illustrates an EELS analysis result for the primary particle surface part in FIG. 4A.

FIG. 5 shows an average particle diameter analysis result for a cathode active material of Comparative Example 1.

FIG. 6 shows an average particle size analysis result for the cathode active material of Exemplary Embodiment 1.

FIG. 7 illustrates a particle hardness measurement result for the cathode active material of Exemplary Embodiment 1.

FIG. 8 illustrates a particle hardness measurement result for the cathode active material of Comparative Example 1.

FIG. 9 illustrates a graph comparing initial charge and discharge after charging and discharging by increasing charging voltage to 4.5V for the cathode active materials of Exemplary Embodiment 1 and Comparative Example 1.

FIG. 10 illustrates a graph showing a measurement result of a high-temperature lifespan characteristic for the cathode active materials of Exemplary Embodiment 1 and Comparative Example 1.

FIG. 11 illustrates a graph showing a measurement result of a high-temperature resistance increase rate for the cathode active materials of Exemplary Embodiment 1 and Comparative Example 1.

FIG. 12A shows a result of performing TEM structure analysis for the surface of the primary particle of the cathode active material prepared according to Exemplary Embodiment 1.

FIG. 12B is an enlarged view of a region in which the primary particle of the cathode active material and the coating layer positioned on the surface of the primary particle coexist in the TEM analysis result of FIG. 12A.

**[Mode for Invention]**

Hereinafter, embodiments of the present invention will be described in detail. However, the description is provided as an example and the present invention is not limited thereto, and the present invention is defined only by the scope of the claims to be described later.

A cathode active material according to an exemplary embodiment is a lithium metal oxide particle in the form of a secondary particle including primary particles, and a coating layer including a boron compound may be positioned on at least a part of surfaces of the primary particles.

The boron compound may include an amorphous structure. As described above, in the cathode active material of the present exemplary embodiment, since the coating layer including the boron compound having the amorphous structure is positioned on the surface of the lithium metal oxide particle, it is possible to increase the particle hardness and lower porosity.

The particle hardness of a lithium metal oxide large particle may range from 151 MPa to 200 MPa, more specifically from 160 MPa to 195 MPa, or from 170 MPa to 190 MPa. In the case that the particle hardness of the lithium metal oxide satisfies the above range, the secondary particle has a dense structure and a low porosity. In the present exemplary embodiment, since the coating layer including the boron compound is positioned on at least a part of the surfaces of the primary particles, the structure of the particles is dense and lithium ions move easily even inside the secondary particle, in other words, between the primary particles. Thus, it is possible to improve a one-time discharge capacity and to implement a lithium secondary battery having a high power characteristic. Further, in the case that the particle hardness of the lithium metal oxide satisfies the above range, it is possible to suppress occurrence of cracks during charging and discharging of the lithium secondary battery, and through this, suppress side reactions with an electrolyte solution, thereby improving lifespan characteristics.

In addition, the porosity of the lithium metal oxide particle may be in the range of 0.3% to 7%, more specifically, 0.4% to 6%, or 0.6% to 5.6%.

Here, the porosity of the lithium metal oxide particle may be measured by the following method, and may be expressed as Equation 1 below.

For example, the porosity may be calculated by cutting the center of the lithium metal oxide particle, for example, by a Focused Ion Beam (FIB) milling method, and then measuring pores in the lithium metal oxide particle by the area using a scanning electron microscope (SEM).

[Equation 1]

$$\text{Porosity (\%)} = (\text{pore area of lithium metal oxide particle cross-section A } / \text{ area of lithium metal oxide particle cross-section A}) \times 100$$

(In Equation 1, A is the area of the cross-section including the diameter of the lithium metal oxide particle.)

In the present exemplary embodiment, since the coating layer including the boron compound is positioned on at least a part of the primary particles as described above, it is possible to remarkably improve the output characteristic of the cathode active material. This is because the boron compound forms a path for the lithium ions to move even through boundaries between the primary particles. Further, it is possible to reduce the porosity of the particle by filling the empty space between the primary particles, thereby improving the output characteristic.

In addition, an average particle diameter (D50) of the primary particles may be increased in the range of 1.3 to 2.5 times compared to the case where no coating layer including the boron compound is positioned on at least a part of the surfaces of the primary particles although they are fired at the same firing temperature.

More specifically, the average particle diameter (D50) of the primary particles may be in the range of 0.3 $\mu$m to 2 $\mu$m, more particularly, 0.4 $\mu$m to 1.5 $\mu$m, or 0.5 $\mu$m to 1.3 $\mu$m.

In the case that the average particle diameter (D50) of the primary particles increases as described above and satisfies the above range, crystallinity of the secondary particle increases. When the crystallinity is increased as described above, removal/insertion of the lithium ions may be facilitated, and the lifespan characteristic may be improved. In addition, it is very advantageous because it is possible to reduce a residual lithium content on the surface of the cathode active material.

The cathode active material of the present exemplary embodiment may be a plurality of lithium metal oxide particles. More specifically, the lithium metal oxide particles may be at least one of large particles having an average particle diameter (D50) in the range of 10 $\mu$m to 30 $\mu$m, small particles having an average particle diameter (D50) in the range of 1 $\mu$m to 6 $\mu$m, and bimodal particles in which the large particles and the small particles are mixed.

The average particle diameter (D50) of the large particles may be, for example, in the range of 10 $\mu$m to 30 $\mu$m or 12 $\mu$m to 20 $\mu$m. The average particle diameter (D50) of the small particles may be, for example, in the range of 1 $\mu$m to 6 $\mu$m or 2 $\mu$m to 5 $\mu$m. In addition, the bimodal particles may be a mixture of the large particles and the small particles in a weight ratio of, for example, 5:5 to 9:1 or 6:4 to 8:2.

In the present exemplary embodiment, a full width at half maximum $FWHM_{(110)}$ of a diffraction peak of the (110) plane by X-ray diffraction of the large particles may be in the range of 0.14° to 0.18°. In addition, a full width at half maximum $FWHM_{(110)}$ of a diffraction peak of the (110) plane by X-ray diffraction of the small particles may be in the range of 0.15° to 0.19°. When the $FWHM_{(110)}$ for the (110) plane of the large particles and the $FWHM_{(110)}$ for the (110) plane of the small particle satisfy the above ranges, it indicates that the cathode active material has excellent crystallinity. Therefore, the cathode active material of the present exemplary embodiment has a stable structure, and when it is applied to a lithium secondary battery, there is a merit of a very excellent lifespan characteristic.

In addition, the boron compound included in the coating layer positioned on at least a part of the surfaces of the primary particles may be at least one of, for example, $Li_3BO_3$, $LiBO_2$, $Li_3B_3O_5$, $Li_6B_4O_9$, $Li_{6.52}B_{18}O_{0.7}$, $Li_{7.4}B_{18}O_{0.7}$, $Li_{7.8}B_{18}O_{0.9}$, and $Li_2B_4O_7$. Particularly, in the present exemplary embodiment, in the case that the boron compound is $Li_3BO_3$, the ionic conductivity is excellent, and it does not react with a lithium byproduct so that it effectively diffuses to the surfaces of the primary particles of the cathode active material to form the coating layer.

Then, the content of the boron compound in the secondary particle may be in the range of 0.001 mol to 0.01 mol, more specifically, 0.003 to 0.005 mol or 0.004 to 0.006 mol. When the content of the boron compound included in the secondary particle is less than 0.001 mol, there is a problem in that the performance of the cathode active material cannot be improved because the coating layer is not effectively formed on the surfaces of the primary particles. Further, in the case that the content of the boron compound exceeds 0.01 mol, the coating layer is excessively formed on the surfaces of the primary particles, and thus there is a problem in that output and lifespan characteristics are reduced.

The content of nickel in metal in the secondary particle may be in the range of 0.65 moles to 0.99 moles, more specifically, 0.65 moles to 0.92 moles, or 0.7 moles to 0.91 moles. As such, in the case that the content of nickel is 0.65 mol or more, a high power characteristic that cannot be obtained in a cathode active material containing 0.5 mol or less of nickel can be realized.

More specifically, the lithium metal oxide may be represented by, for example, Chemical Formula 1 below.

[Chemical Formula 1]    $Li_xNi_aCo_bMn_cM1_dM2_eO_2$

In Chemical Formula 1, M1 and M2 are each at least one of Zr, Ti, Mg, Al, Ni, Mn, Zn, Fe, Cr, Mo, and W, x is $0.90 \leq x \leq 1.07$, a is $0.65 \leq a \leq 0.99$, b is $0 < b \leq 0.3$, c is $0 < c \leq 0.3$, d is $0 < d < 0.01$, e is $0 < e < 0.01$, and $a + b + c + d + e = 1$.

Here, b may be $0 < b \leq 0.2$ or $0 < b \leq 0.1$, and c may be $0 < c \leq 0.2$ or $0 < c \leq 0.1$.

In addition, M1 may be Zr, and M2 may be Al. In the case that M1 is Zr and M2 is Al, the cathode active material of the present exemplary embodiment may include 0.05 to 0.6 parts by weight of Zr, and 0.01 to 0.4 parts by weight of Al, based on the entire lithium metal oxide.

The cathode active material of the present exemplary embodiment may further include a surface layer positioned on the surface of the secondary particle. The surface layer may include, for example, at least one selected from the group consisting of B, Zr, Al, W, Nb, P, Ce, Ti, Ta, Co, Si, and Mn. As such, in the case of further including the surface layer positioned on the surface of the secondary particle, a side reaction between the cathode active material and the electrolyte solution is suppressed, thereby significantly reducing deterioration of the lithium secondary battery.

Another embodiment of the present invention provides a method for manufacturing a cathode active material including preparing a coating layer forming material, obtaining a metal precursor by adding an aqueous metal salt solution in a co-precipitation reactor, and obtaining a cathode active material by mixing and firing the coating layer forming material, the metal precursor, and a lithium raw material.

Particularly, according to the present exemplary embodiment, the coating layer forming material may be provided as a particulate powder. The average particle diameter (D50) of the particulate powder may be, for example, in the range of 0.1 $\mu$m to 1.5 $\mu$m, and more specifically, in the range of 0.3 $\mu$m to 1 $\mu$m. More specifically, the preparing of the coating layer forming material includes mixing and firing raw materials constituting a boron compound, and pulverizing the fired sintered product. Here, the mixing and firing of the raw materials constituting the boron compound may be performed, for example, at a temperature of 400 °C to 700 °C for 2 hours to 7 hours. In the case that the firing is performed under the above condition, there is an advantage in that a lithium ion conductor in which lithium ions can move well may be effectively manufactured.

As such, in the case that the coating layer forming material is prepared in the form of solid particulates and mixed with the metal precursor and the lithium raw material to prepare the cathode active material, the boron compound may penetrate into the inside of the secondary particle, more specifically, to the surfaces of the primary particles to form a coating layer.

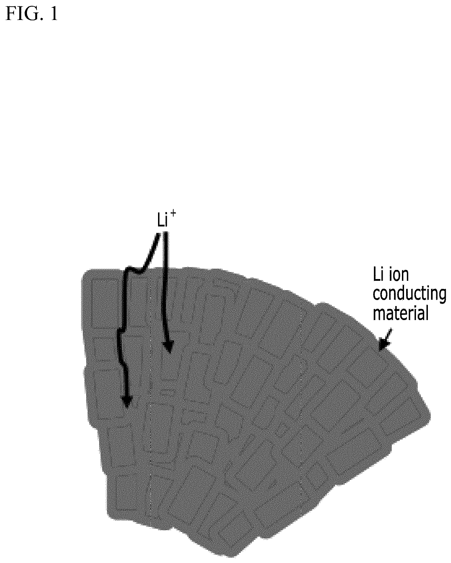

FIG. 1 is a schematic diagram of a portion of a secondary particle according to an embodiment of the present invention.

Referring to FIG. 1, in the case that a cathode active material is prepared by preparing a coating layer forming material in the form of solid particulates and mixing it with a metal precursor and a lithium raw material as in the present exemplary embodiment, the boron compound may penetrate between the surfaces of the primary particles, in other words, between interfaces of the primary particles. Therefore, since the boron compound having high lithium ion conductivity exists between the interfaces of the primary particles, the output characteristic of the cathode active material may be remarkably improved.

In addition, the obtaining of the cathode active material, more specifically, may further include mixing and firing the coating layer forming material, the metal precursor, and the lithium raw material to prepare a sintered body, followed by washing with water the sintered body and forming a surface layer on the washed sintered body.

The washing with water is to remove residual lithium present on the surface, and may be performed using, for example, distilled water.

Then, the water-washed sintered body may be dried to remove moisture and the like. The drying may be performed, for example, in a temperature range of 80 °C to 300 °C for 1 hour to 30 hours.

Then, forming a surface layer on the dried sintered body may be performed.

Specifically, forming a surface layer surrounding an outer surface of the lithium metal oxide particle may include preparing a mixture by mixing the lithium metal oxide particle and a raw material for forming the surface layer and performing heat treatment of the mixture.

The raw material for forming the surface layer may be, for example, at least one selected from the group consisting of B, Zr, Al, W, Nb, P, Ce, Ti, Ta, Co, Si, and Mn. The preparing of the mixture by mixing the lithium metal oxide particle and the raw material for forming the surface layer is not limited to dry mixing or wet mixing.

Then, the heat treatment may be performed, for example, in an air, oxygen ($O_2$), or nitrogen ($N_2$) atmosphere at a temperature range of 200 °C to 800 °C for 1 hour to 10 hours.

More detailed conditions for manufacturing the cathode active material of the present exemplary embodiment will be described in detail in Examples to be described later.

In another embodiment of the present invention, there is provided a lithium secondary battery including a cathode including the cathode active material according to an embodiment of the present invention described above, an anode including an anode active material, and an electrolyte positioned between the cathode and the anode.

The description related to the cathode active material will be omitted because it is the same as the above-described embodiment of the present invention.

The cathode active material layer may include a binder and a conductive material.

The binder serves to well adhere cathode active material particles to each other and also to adhere the cathode active material to a current collector.

The conductive material is used to impart conductivity to the electrode, and any material that does not cause chemical change and has electronic conductivity may be used as the conductive material in the configured battery.

The anode includes a collector and an anode active material layer formed on the collector, and the anode active material layer includes an anode active material.

The anode active material includes a material capable of reversibly intercalating/deintercalating lithium ions, a lithium metal, a lithium metal alloy, a material capable of doping and dedoping lithium, or a transition metal oxide.

The material capable of reversibly intercalating/deintercalating the lithium ions may be a carbon material, any carbon-based anode active material generally used in lithium ion secondary batteries may be used, and its representative example may be crystalline carbon, amorphous carbon, or a combination thereof.

As the lithium metal alloy, an alloy of lithium and a metal selected from the group consisting of Na, K, Rb, Cs, Fr, Be, Mg, Ca, Sr, Si, Sb, Pb, In, Zn, Ba, Ra, Ge, Al, and Sn may be used.

The material capable of doping and dedoping lithium may include Si, $SiO_x$ (0 < x < 2), an Si-Y alloy (wherein Y is an element selected from the group consisting of alkali metals, alkaline earth metals, Group 13 elements, Group 14 elements, transition metals, rare earth elements, and combinations thereof, but not Si), Sn, $SnO_2$, and Sn-Y (wherein Y is an element selected from the group consisting of alkali metals, alkaline earth metals, Group 13 elements, Group 14 elements, transition metals, rare earth elements, and combinations thereof, but not Sn).

Examples of the transition metal oxide may include vanadium oxide and lithium vanadium oxide. The anode active material layer also includes a binder, and may optionally further include a conductive material.

The binder serves to well adhere anode active material particles to each other and also to adhere the anode active material to the current collector.

The conductive material is used to impart conductivity to the electrode, and any material that does not cause chemical change and has electronic conductivity may be used as the conductive material in the configured battery.

As the collector, one selected from the group consisting of copper foil, nickel foil, stainless steel foil, titanium foil, nickel foam, copper foam, a polymer substrate coated with conductive metal, and combinations thereof may be used.

Each of the anode and the cathode is manufactured by preparing an active material composition by mixing the active material, the conductive material, and the binder in a solvent and applying the composition to the current collector. Since such an electrode manufacturing method is widely known in the art, a detailed description thereof will be omitted in the present specification. The solvent may include, but is not limited to, N-methylpyrrolidone.

The electrolyte includes a non-aqueous organic solvent and a lithium salt.

The non-aqueous organic solvent serves as a medium through which ions involved in the electrochemical reaction of the battery can move.

The lithium salt is dissolved in an organic solvent, serves as a supply source of lithium ions in the battery, enables basic lithium secondary battery operation, and promotes movement of lithium ions between the cathode and the anode.

Depending on the type of lithium secondary battery, a separator may exist between the cathode and the anode. As the separator, polyethylene, polypropylene, polyvinylidene fluoride, or a multilayer of two or more layers thereof may be used, and a mixed multilayer such as a polyethylene/polypropylene two-layer separator, a polyethylene/polypropylene/polyethylene three-layer separator, and a polypropylene/polyethylene/polypropylene three-layer separator may also be used.

Lithium secondary batteries may be classified into lithium ion batteries, lithium ion polymer batteries, and lithium polymer batteries depending on the types of separator and electrolyte used, may be classified into cylindrical, prismatic, coin-type, pouch-type, etc. according to the shape, and may be divided into a bulk type and a thin film type according to the size. Since the structure and manufacturing method of these batteries are well known in the art, a detailed description thereof will be omitted.

Hereinafter, embodiments of the present invention will be described in detail. However, they are provided as examples, and the present invention is not limited thereto. The present invention is only defined by the scope of the claims to be described later.

**(Preparation Example 1) - Preparation and Characterization of Coating Layer Forming Material**

$LiOH \cdot H_2O$ and $H_3BO_3$, which are raw materials constituting the boron compound, were weighed and mixed in a stoichiometric ratio, and then fired at 600 °C for 4 hours for synthesis.

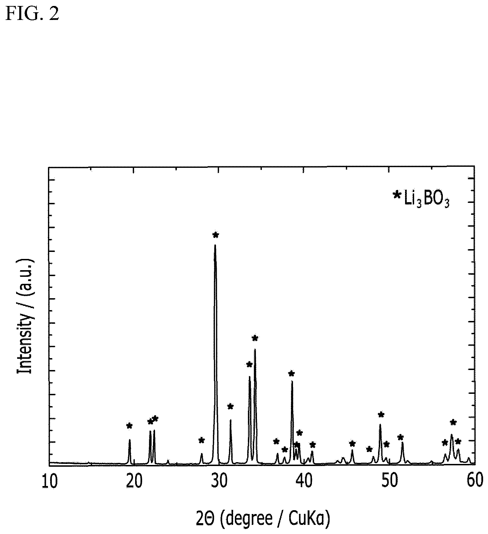

FIG. 2 illustrates an XRD measurement result of the coating layer forming material prepared according to Preparation Example 1. Referring to FIG. 2, it can be seen that the $Li_3BO_3$ phase is well formed in a crystal structure.

The coating layer forming material synthesized as described above was pulverized to have an average particle diameter in the range of 0.5 $\mu$m to 0.7 $\mu$m through a bead mill to prepare a coating layer forming material having the $Li_3BO_3$ composition. @@@

A characteristic test was performed on the coating layer forming material prepared as described above in the following manner.

After making a pellet having a diameter of 10 mm from the powder of the synthesized coating layer forming material, heat treatment was performed at about 720 °C. Then, its surface was polished to prepare a thickness of 0.5 mm.

An electrode was formed by vacuum thermal evaporation of an Au thin film to a thickness of 3 $\mu$m on both sides of the pellet.

Thereafter, a semicircle was measured from 7 MHz to 1 Hz using an AC impedance analyzer by a 2 probe method. The ionic conductivity was calculated from the measured semicircle diameter. At this time, the calculated ionic conductivity was about $1.2 \times 10^{-6}$ S/cm.

$Li_3BO_3$ has a theoretical density of 2.16 g/cm$^3$ and an m.p. of about 750 °C, and is composed of orthoborate ($BO_3^{3-}$) units. Also, it does not react with $Li_2O$. Therefore, it may diffuse to the primary particle interface of the cathode active material without reacting with the lithium by-product present in the high nickel-based cathode active material.

**(Exemplary Embodiment 1) Preparation of 71 mol% Ni large particle diameter cathode active material containing 0.005 mol of $Li_3BO_3$**

**1) Preparation of cathode active material precursor**

$NiSO_4 \cdot 6H_2O$ was used as a raw material for nickel, $CoSO_4 \cdot 7H_2O$ as a raw material for cobalt, and $MnSO_4 \cdot H_2O$ as a raw material for manganese. These raw materials were dissolved in distilled water to prepare a 2.5 M metal salt aqueous solution.

After preparing the co-precipitation reactor, $N_2$ was purged to prevent oxidation of metal ions during the co-precipitation reaction, and the reactor temperature was maintained at 50°C.

The metal salt aqueous solution and $NH_4(OH)$ as a chelating agent were added to the co-precipitation reactor. In addition, NaOH was used to adjust the pH. The precipitate obtained by the co-precipitation process was filtered, washed with distilled water, and dried in an oven at 100 °C for 24 hours to prepare a cathode active material precursor.

The composition of the prepared precursor was $(Ni_{0.71}Co_{0.10}Mn_{0.19})(OH)_2$, and the average particle diameter (D50) was 11.0 $\mu$m.

**2) Preparation of cathode active material**

Based on 1 mole of the cathode active material precursor prepared in the 1) above, 1.05 moles of $LiOH \cdot H_2O$ (Samchun Chemicals, battery grade), 0.0022 moles of $ZrO_2$ (Aldrich, 4N), 0.007 moles of $Al(OH)_3$ (Aldrich, 4N), and 0.005 mol of $Li_3BO_3$ were uniformly mixed to prepare a mixture.

The mixture was charged into a tube furnace, fired while oxygen inflowed, and then cooled to room temperature.

Then, the cooled product was washed with distilled water, filtered, dried, and then dry mixed with $H_3BO_3$ (Aldrich). The mixture was heat-treated at 300 to 350 °C for 5 hours to prepare a cathode active material coated with boron (B) on the surface.

**(Exemplary Embodiment 2) Preparation of 71 mol% Ni small particle diameter cathode active material containing 0.0025 mol of $Li_3BO_3$**

**1) Preparation of cathode active material precursor**

In the same manner as in 1) of Exemplary Embodiment 1, preparation of a cathode active material precursor was carried out so that the average particle diameter (D50) of the precursor was 4 $\mu$m.

**2) Preparation of cathode active material**

A cathode active material was prepared using the same method as in 2) of Exemplary Embodiment 1, except that 0.0025 mol of $Li_3BO_3$ was added.

**(Exemplary Embodiment 3) Preparation of 71 mol% Ni large particle diameter cathode active material containing 0.003 mol of $Li_3BO_3$**

A cathode active material precursor was prepared using the same method as in 1) of Exemplary Embodiment 1.

Thereafter, a cathode active material was prepared using the same method as in 2) of Exemplary Embodiment 1, except that 0.003 mol of $Li_3BO_3$ was added.

**(Exemplary Embodiment 4) Preparation of 71 mol% Ni large particle diameter cathode active material containing 0.001 mol of $Li_3BO_3$**

A cathode active material precursor was prepared using the same method as in 1) of Exemplary Embodiment 1.

Thereafter, a cathode active material was prepared using the same method as in 2) of Exemplary Embodiment 1, except that 0.001 mol of $Li_3BO_3$ was added.

**(Exemplary Embodiment 5) Preparation of 71 mol% Ni large particle diameter cathode active material containing 0.007 mol of $Li_3BO_3$**

A cathode active material precursor was prepared using the same method as in 1) of Exemplary Embodiment 1.

Thereafter, a cathode active material was prepared using the same method as in 2) of Exemplary Embodiment 1, except that 0.007 mol of $Li_3BO_3$ was added.

**(Exemplary Embodiment 6) Preparation of 71 mol% Ni large particle diameter cathode active material containing 0.01 mol of $Li_3BO_3$ (실시예 6) $Li_3BO_3$**

A cathode active material precursor was prepared using the same method as in 1) of Exemplary Embodiment 1.

Thereafter, a cathode active material was prepared using the same method as in 2) of Exemplary Embodiment 1, except that 0.01 mol of $Li_3BO_3$ was added. 이후, $Li_3BO_3$

**(Comparative Example 1) Preparation of 71 mol% Ni large particle diameter cathode active material without $Li_3BO_3$**

A cathode active material precursor was prepared using the same method as in 1) of Exemplary Embodiment 1.

Thereafter, a cathode active material was prepared using the same method as in 2) of Exemplary Embodiment 1, except that $Li_3BO_3$ was not added.

**(Comparative Example 2) Preparation of 71 mol% Ni small particle diameter cathode active material without $Li_3BO_3$**

A cathode active material precursor was prepared using the same method as in 1) of Exemplary Embodiment 2.

Thereafter, a cathode active material was prepared using the same method as in 2) of Exemplary Embodiment 1, except that $Li_3BO_3$ was not added.

**(Exemplary Embodiment 7) Preparation of 71 mol% Ni small particle diameter cathode active material containing 0.0015 mol of $Li_3BO_3$**

A cathode active material precursor was prepared using the same method as in 1) of Exemplary Embodiment 2.

Thereafter, a cathode active material was prepared using the same method as in 2) of Exemplary Embodiment 1, except that 0.0015 mol of $Li_3BO_3$ was added.

**(Exemplary Embodiment 8) Preparation of 71 mol% Ni small particle diameter cathode active material containing 0.001 mol of $Li_3BO_3$**

A cathode active material precursor was prepared using the same method as in 1) of Exemplary Embodiment 2.

Thereafter, a cathode active material was prepared using the same method as in 2) of Exemplary Embodiment 1, except that 0.001 mol of $Li_3BO_3$ was added.

**(Exemplary Embodiment 9) Preparation of 71 mol% Ni small particle diameter cathode active material containing 0.005 mol of $Li_3BO_3$**

A cathode active material precursor was prepared using the same method as in 1) of Exemplary Embodiment 2.

Thereafter, a cathode active material was prepared using the same method as in 2) of Exemplary Embodiment 1, except that 0.005 mol of $Li_3BO_3$ was added.

**(Exemplary Embodiment 10) Preparation of 71 mol% Ni small particle diameter cathode active material containing 0.007 mol of $Li_3BO_3$**

A cathode active material precursor was prepared using the same method as in 1) of Exemplary Embodiment 2.

Thereafter, a cathode active material was prepared using the same method as in 2) of Exemplary Embodiment 1, except that 0.007 mol of $Li_3BO_3$ was added.

**(Comparative Example 3) Preparation of 71 mol% Ni bimodal cathode active material without $Li_3BO_3$**

The large particle diameter cathode active material of Comparative Example 1 and the small particle diameter cathode active material of Comparative Example 2 were uniformly mixed in a weight ratio of 7:3 to prepare a bimodal cathode active material.

**(Exemplary Embodiment 11) Preparation of 71 mol% Ni bimodal cathode active material containing $Li_3BO_3$**

The large particle diameter cathode active material of Exemplary Embodiment 1 and the small particle diameter cathode active material of Exemplary Embodiment 2 were uniformly mixed in a weight ratio of 7:3 to prepare a bimodal cathode active material.

**(Exemplary Embodiment 12) Preparation of 71 mol% Ni large particle diameter cathode active material containing 0.005 mol of $Li_3BO_3$ without surface layer containing boron positioned on surface of lithium metal oxide particle**

A cathode active material precursor was prepared using the same method as in 1) of Exemplary Embodiment 1.
Thereafter, a cathode active material was prepared using the same method as in 2) of Exemplary Embodiment 1, except that 0.005 mol of $Li_3BO_3$ was added, but a dry surface coating process using $H_3BO_3$ was omitted. 이후, $Li_3BO_3$를　　　0.005몰 첨가한 것을 제외하고는 실시예　　　1의　　　2)와 동일한 방법으로 양극 활물질을 제조하되, $H_3BO_3$

**(Reference Example 1) A cathode active material prepared by mixing boric acid with sintered powder after preparing precursor**

1) Preparation of cathode active material precursor

A cathode active material precursor was prepared using the same method as in 1) of Exemplary Embodiment 1.

2) Preparation of cathode active material

Based on 1 mole of the cathode active material precursor prepared in the 1) above, 1.05 moles of $LiOH \cdot H_2O$ (Samchun Chemicals, battery grade), 0.0022 moles of $ZrO_2$ (Aldrich, 4N), and 0.007 moles of $Al(OH)_3$ (Aldrich, 4N) were uniformly mixed to prepare a mixture.
The mixture was charged into a tube furnace, fired while oxygen inflowed, and then cooled to room temperature.
Then, the cooled product was washed with distilled water, filtered and dried, and then 0.005 mol of $H_3BO_3$ (Aldrich) was dry mixed. Thereafter, distilled water was added in an amount of 10 wt% based on the weight of the cathode active material and further mixed. Water was primarily dried by raising the temperature to 100°C while maintaining a vacuum degree of 10 mTorr or less in a vacuum dryer. Thereafter, the temperature was secondarily raised to 190 °C to finally prepare a cathode active material.

**(Reference Example 2) Preparation of 71 mol% Ni large particle diameter cathode active material containing 0.0005 mol of $Li_3BO_3$**

A cathode active material precursor was prepared using the same method as in 1) of Exemplary Embodiment 1.
Thereafter, a cathode active material was prepared using the same method as in 2) of Exemplary Embodiment 1, except that 0.0005 mol of $Li_3BO_3$ was added.

**(Reference Example 3) Preparation of 71 mol% Ni large particle diameter cathode active material containing 0.015 mol of $Li_3BO_3$**

A cathode active material precursor was prepared in the same manner as in Example 1 1).
Thereafter, a cathode active material was prepared using the same method as in 2) of Exemplary Embodiment 1, except that 0.015 mol of $Li_3BO_3$ was added.

**(Comparative Example 4)** - Preparation of 71 mol% Ni large particle diameter cathode active material containing 0.005 mol $Li_3BO_3$ having a particle diameter of 1.7 $\mu$m

**1) Preparation of cathode active material precursor**

A cathode active material precursor was prepared using the same method as in 1) of Exemplary Embodiment 1.

**2) Preparation of cathode active material**

Based on 1 mole of the cathode active material precursor prepared in the 1) above, 1.05 moles of $LiOH \cdot H_2O$ (Samchun Chemicals, battery grade), 0.0022 moles of $ZrO_2$ (Aldrich, 4N), 0.007 moles of $Al(OH)_3$ (Aldrich, 4N), and 0.005 moles of $Li_3BO_3$ were uniformly mixed to prepare a mixture.

Here, $Li_3BO_3$ was prepared using the same method as in Preparation Example 1, but a pulverized material having an average particle diameter of 1.7 $\mu$m was used.

The mixture was charged into a tube furnace, fired while oxygen inflowed, and then cooled to room temperature.

Then, the cooled product was washed with distilled water, filtered, dried, and then dry mixed with $H_3BO_3$ (Aldrich). The mixture was heat-treated at 300 to 350 °C for 5 hours to prepare a cathode active material coated with boron (B) on the surface.

**(Experimental Example 1) Primary particle surface part component measurement (Electron Energy Loss Spectroscopy, EELS)**

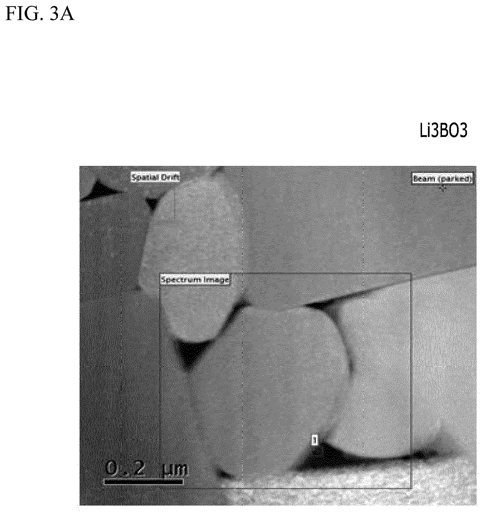

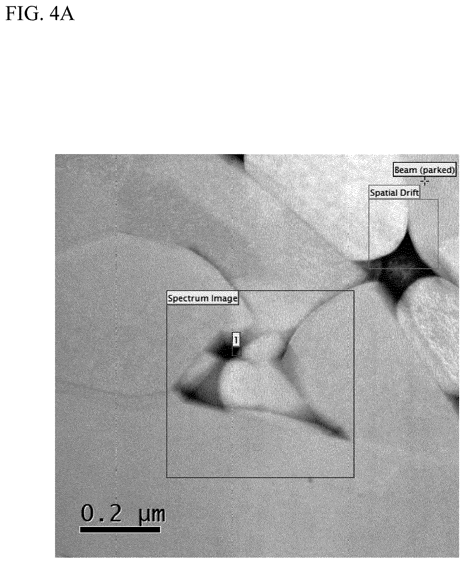

The cathode active materials prepared in Exemplary Embodiment 1 and Comparative Example 4 were cut in cross-section with Focused Ion Beam (FIB, SEIKO 3050SE), and the cross-sections of the cathode active materials were analyzed with Scanning Transmission Electron Microscopy (STEM, JEOL ARM 200F) analysis equipment and shown in FIG. 3A and FIG. 4A.

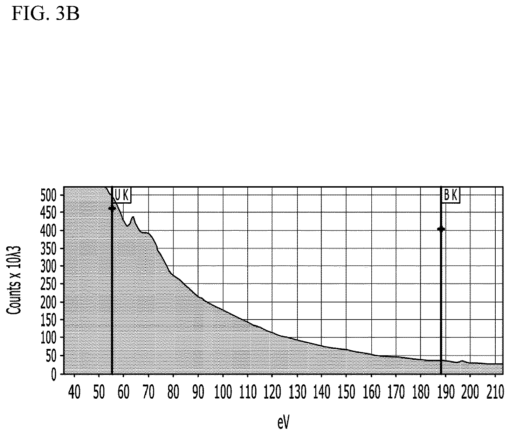

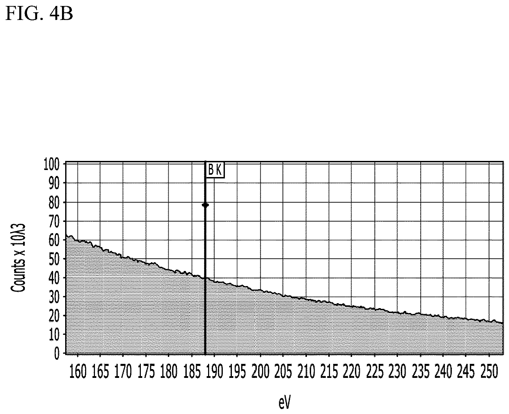

Then, as shown in FIGS. 3A and 4A, with respect to the surface parts of the primary particles of the cathode active materials, whether or not a coating layer including the boron compound was formed on the surface parts was analyzed using Electron Energy Loss Spectroscopy (EELS, GATAN GIF Quantum ER 965) equipment. The results are shown in FIGS. 3B and 4B.

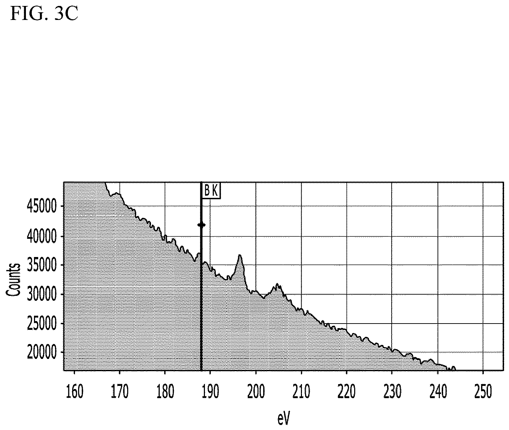

Referring to FIG. 3B, it can be seen that lithium and boron are present together on the surface of the primary particle. In order to more clearly determine whether or not boron was detected, a part of the spectrum of the boron detection region in FIG. 3B was enlarged and shown in FIG. 3C.

Referring to FIG. 3C, it can be seen more clearly that boron is positioned on the surface of the primary particle. However, for lithium and boron, the peak positions shifted in the positive direction compared to the original peak positions, which is typical due to oxidation of the specimen, and they shifted in the positive direction by about 5-10 eV.

From the results of FIGS. 3B and 3C, it can be seen that the coating layer including the boron compound was formed on the surface of the primary particle. Accordingly, it can be confirmed that the coating layer including the boron compound is formed on the surface of the primary particles in the cathode active material according to the present exemplary embodiment.

However, referring to FIG. 4B, in the case that the coating layer was formed on the surface of the lithium metal oxide using $Li_3BO_3$ having an average particle diameter (D50) of 1.7 $\mu$m as in Comparative Example 4, it can be confirmed that boron does not exist in the coating layer positioned on the surface of the primary particle in the cathode active material. 그러나 도 4b를 참고하면, 비교예 4와 같이 평균 입경(D50)이 1.7$\mu$m인 $Li_3BO_3$

**(Experimental Example 2) Primary particle average particle diameter analysis (SEM) of cathode active material**

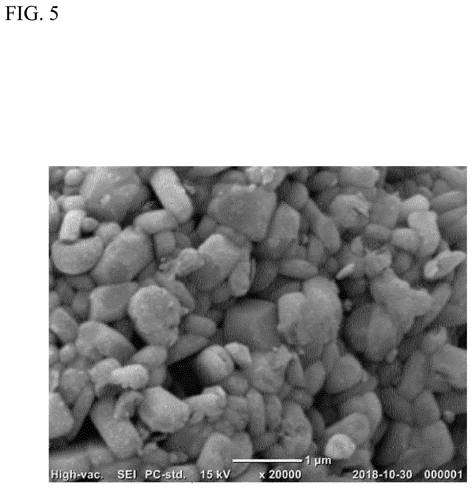

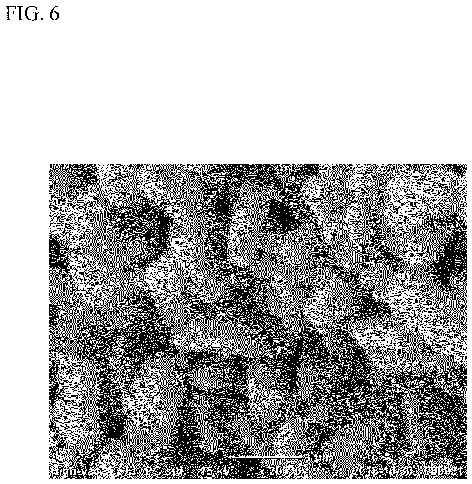

For the cathode active materials prepared according to Exemplary Embodiment 1 and Comparative Example 1, the average particle size (D50) of the primary particles was measured through SEM analysis. FIG. 5 shows the result for the cathode active material of Comparative Example 1, and FIG. 6 shows the result of the cathode active material of Exemplary Embodiment 1.

Referring to FIG. 5, it can be seen that the average particle diameter (D50) of the primary particles in the cathode active material prepared according to Comparative Example 1 is in the range of about 0.2 $\mu$m to 1 $\mu$m.

In contrast, referring to FIG. 6, it can be seen that the average particle diameter (D50) of the primary particles in the cathode active material prepared according to Exemplary Embodiment 1 increased to the range of 0.5 $\mu$m to 1.3 $\mu$m.

In other words, it is determined that $Li_3BO_3$ serves as a sintering agent, including the case of mixing and firing $Li_3BO_3$ together with the metal precursor and the lithium raw material when manufacturing the cathode active material.

As such, when the average particle diameter (D50) of the primary particles produced at the same firing temperature is increased, it is very advantageous in energy cost reduction as well as the crystallinity of the secondary particle is increased. When the crystallinity is increased in this way, lithium ion removal/insertion is advantageous, and the lifespan characteristic may be improved. In addition, it is very advantageous because it is possible to reduce the residual lithium content on the surface of the cathode active material.

**(Experimental Example 3) X-ray diffraction evaluation**

For the cathode active materials prepared according to Exemplary Embodiments 1 and 2 and Comparative Examples 1 and 2, lattice constants were measured by X-ray diffraction measurement using CuKα rays. The measured a-axis length and the c-axis length and the distance ratio (c/a axis ratio) between the crystal axes are shown in Table 1 below.

In addition, the full width at half maximum and crystalline size of the cathode active materials were measured, and are shown in Table 1 below.

For crystallographic consideration, Rietveld analysis was performed using high score plus Rietveld software. XRD measurement for Rietveld analysis was measured using X'Pert powder (PANalytical) XRD equipment with CuKα as a target line. Under measurement conditions of $2\theta = 10°$ to $110°$ and scan speed (°/S) = 0.328, hardness of the (003) plane, (104) plane, (006) plane, (102) plane, and (101) plane was obtained.

I(003)/I(104) was obtained from the hardness (peak area) measurement results of the (003) plane and the (104) plane, and shown in Table 1 below.

In addition, the R-factor was obtained according to Equation 1 below from the hardness measurement results of the (006) plane, (102) plane, and (101) plane, and shown in Table 1 below.

From the results, as the Goodness of Fit (GOF) value is calculated to be within 1.3, it can be said that the Rietveld structural analysis result is a reliable number.

[Equation 1]

$$R\text{-factor} = \{I(006) + I(102)\}/I(101)$$

(Table 1)

| Classification | FWHM$_{(110)}$ | a(Å) | c(Å) | c/a | Average grain size (Crystalline size) (nm) | I(003) /I (104) | R_ factor | GOF |
|---|---|---|---|---|---|---|---|---|
| Exemplary Embodiment 1 | 0.157 | 2.872 | 14.225 | 4.953 | 158 | 1.21 | 0.502 | 1.12 |
| Comparative Example 1 | 0.182 | 2.873 | 14.228 | 4.952 | 132 | 1.17 | 0.524 | 1.22 |
| Exemplary Embodiment 2 | 0.175 | 2.873 | 14.229 | 4.953 | 97 | 1.20 | 0.491 | 1.13 |
| Comparative Example 2 | 0.193 | 2.873 | 14.229 | 4.953 | 80 | 1.18 | 0.501 | 1.18 |

Referring to Table 1, when Exemplary Embodiment 1 and Comparative Example 1, which are large diameter cathode active materials, were compared, the lengths of the a-axis and the c-axis did not change significantly. However, the full width at half maximum was significantly reduced in Exemplary Embodiment 1 compared to Comparative Example 1, and the grain size was greatly increased. This means that the crystallization proceeded better at the same firing temperature. When the cathode active material that has been well crystallized as described above is applied to a lithium secondary battery, the lifespan characteristic of the battery may be improved and residual lithium may be reduced, which is very advantageous.

Then, the degree of cation mixing between Li$^+$ and Ni$^{2+}$ was measured through I(003)/I(104), which is the peak area ratio of I(003) and 1(104). In addition, the R-factor value through which the degree of hexagonal order can be known was obtained through Equation 1.

In the cathode active material of Exemplary Embodiment 1, the I(003)/I(104) ratio was increased compared to Comparative Example 1, and the R-factor was decreased, so cation mixing was decreased, and it was confirmed that the hexagonal structure was well grown.

On the other hand, when comparing Exemplary Embodiment 2 and Comparative Example 2, which are small particle diameter cathode active materials, the lengths of the a-axis and the c-axis did not change significantly. However, similarly to the large particle size active material, it can be seen that the full width at half maximum was greatly reduced and the grain size was increased.

**(Experimental Example 4) Measurement of particle hardness**

The particle hardnesss of the cathode active materials prepared according to Exemplary Embodiment 1 and Comparative Example 1 were measured. The particle hardnesss were measured using an optical microscope and equipment equipped with a pressure rod for compression (Micro particle compression test, MCT-W500 manufactured by Shimadzu).

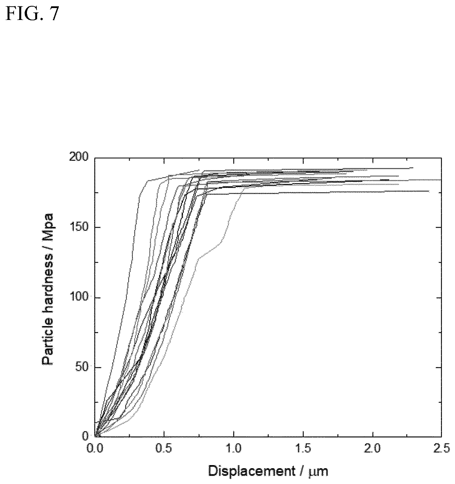

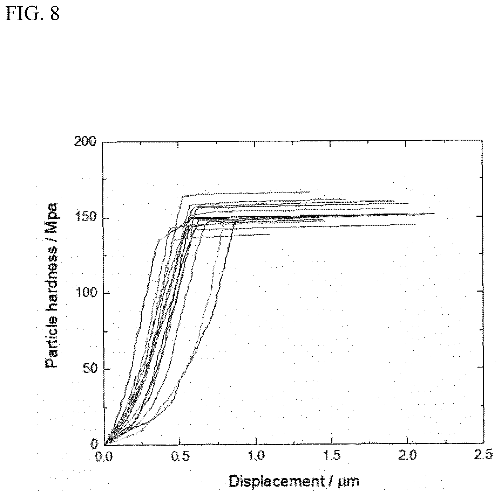

Specifically, the particle hardnesss were measured by randomly selecting 15 cathode active material particles, and after removing the maximum value, minimum value, and noise, it is shown in FIGS. 7 and 8.

FIG. 7 shows a result of measuring the particle hardness of the cathode active material of Exemplary Embodiment 1, and FIG. 8 shows a result of measuring the particle hardness of the cathode active material of Comparative Example 1.

Referring to FIG. 7, the cathode active material of Exemplary Embodiment 1 exhibited a particle hardness of about 180 MPa. In contrast, referring to FIG. 8, the cathode active material of Comparative Example 1 exhibited a particle hardness of about 150 MPa. Through this, it can be seen that, in the case of the cathode active material containing $Li_3BO_3$, the particle hardness of the cathode active material is increased when fired at the same temperature. When the particle hardness of the cathode active material is increased, it is possible to suppress the occurrence of cracks during charging and discharging of the lithium secondary battery, thereby suppressing the side reaction with the electrolyte solution.

For the cathode active materials prepared according to Exemplary Embodiments 1, 3, 4, 5, and 6 and Comparative Example 1, the particle hardnesss were measured using the same method and then the particle hardnesss calculated according to Equation 2 are shown in Table 2 below.

[Equation 2]

$$St = 2.8 \times P/(\pi d^2)$$

St: particle hardness (tensile strength (MPa))
P: applied pressure (test force (N))
d: particle diameter (mm)

**(Experimental Example 5) Electrochemical characteristic evaluation**

2032 coin-type half batteries were prepared using the cathode active materials prepared according to Exemplary Embodiments 1 to 12, Comparative Examples 1 to 4, and Reference Examples 1 to 3, and then electrochemical evaluation was performed.

**(1) Coin-type half battery manufacture**

Specifically, the cathode active material, polyvinylidene fluoride binder (trade name: KF1100), and denka black conductive material are mixed in a weight ratio of 92.5:3.5:4, and this mixture was added to N-Methyl-2-pyrrolidone solvent so that the solid content was about 30% by weight to prepare a cathode active material slurry.

The slurry was coated on an aluminum foil (Al foil, thickness: 15 $\mu$m) which was a cathode collector using a doctor blade, dried and rolled to prepare a cathode. The loading amount of the cathode was about 14 mg/cm$^3$ , and the rolling density was about 3.1 g/cm$^3$.

A 2032 coin-type half battery was manufactured by a conventional method using the cathode, a lithium metal anode (thickness 200 $\mu$m, Honzo metal), an electrolyte solution, and a polypropylene separator. The electrolyte solution was prepared by dissolving 1M $LiPF_6$ in a mixed solvent of ethylene carbonate, dimethyl carbonate, and ethylmethyl carbonate (EMC) (mixing ratio EC:DMC:EMC=3:4:3 vol%) to prepare a mixed solution and then adding 1.5 wt% of vinylene carbonate (VC) to the mixed solution.

## (2) Evaluation of charging and discharging characteristics

After aging the coin-type half battery prepared in the (1) above at room temperature (25 °C) for 10 hours, a charge/discharge test was performed.

For capacity evaluation, 170 mAh/g was used as the evaluation standard capacity at 0.1C rate, and constant current (CC)/constant voltage (CV) 3V to 4.3V, 1/20C cut-off conditions were applied as the charging/discharging conditions. To measure the discharge capacity as the initial capacity, charge and discharge of 0.1C charge/0.1C discharge was performed once, and then the results are shown in Table 2 below as the discharge capacity.

In addition, the 0.2C discharge capacity ratio to the 0.2C charge capacity was obtained, and the results are shown in Table 2 below as the initial efficiency.

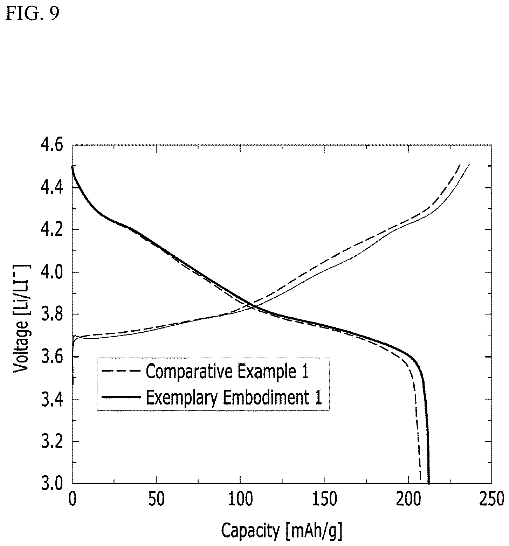

Meanwhile, FIG. 9 shows a graph comparing initial charge and discharge after charging and discharging by increasing the charging voltage to 4.5 V for the cathode active materials of Exemplary Embodiment 1 and Comparative Example 1.

More specifically, FIG. 9 is to more clearly determine the effect of preparing the cathode active material by adding $Li_3BO_3$ together with the metal precursor and the lithium raw material. In other words, for the cathode active materials of Exemplary Embodiment 1 and Comparative Example 1, a graph comparing the initial charge and discharge after increasing the charging voltage to 4.5V, which was higher than the general measurement range of 4.3V and charging and discharging once under the 0.1C charge/0.1C discharge condition was illustrated.

Referring to FIG. 9, Comparative Example 1 showed a charge capacity of 230 mAh/g and a discharge capacity of 207 mAh/g. In contrast, Exemplary Embodiment 1 showed a charge capacity of 236 mAh/g and a discharge capacity of 212 mAh/g, exhibiting that both the initial charge and discharge capacities were increased. Particularly, it can be seen that the resistance of the cathode active material of Exemplary Embodiment 1 is less than that of the cathode active material of Comparative Example 1 in the range of 3.9 V to 4.2 V during charging. For the 2C output, the discharge capacity was measured by applying a constant current twice as large as the 1C reference capacity, and this was converted into a 2C/0.1C capacity ratio within the range of 4.3 V-3 V.

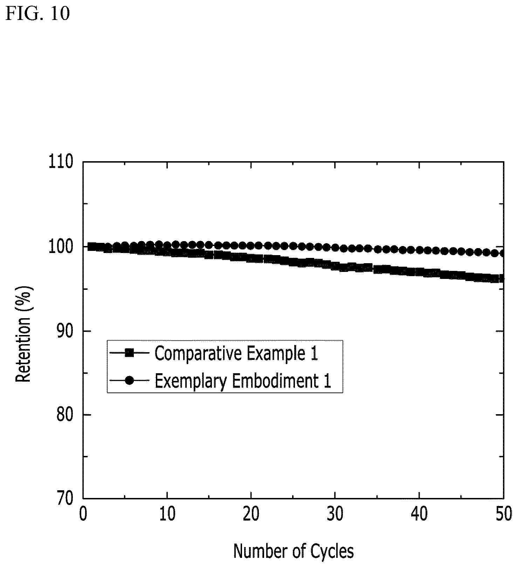

Then, in order to determine the high-temperature lifespan characteristic, 50 times of charging and discharging were performed at a high temperature (45°C) under a 0.3C charge/0.3C discharge condition, the ratio of the 50 times of discharge capacity to the one-time discharge capacity was obtained, and the result was shown in Table 2 below. On the other hand, for the cathode active materials of Exemplary Embodiment 1 and Comparative Example 1, a graph comparing the high-temperature lifespan characteristics was shown in FIG. 10.

Referring to FIG. 10, it can be seen that the cathode active material of Exemplary Embodiment 1 shows very good results at 99% of the initial capacity even after being charged and discharged 50 times. On the other hand, it can be seen that the cathode active material of Comparative Example 1 had a lifespan characteristic of about 96% after being charged and discharged 50 times.

In addition, an increase rate of high temperature resistance (Direct current internal resistance: DC-IR) is obtained by measuring a high-temperature initial resistance value, then measuring the resistance value after 50 cycles of life, and converting the increase rate into a percentage (%). The results are shown in Table 2 below.

Here, the high-temperature initial resistance value is obtained by applying a 0.5C discharge current at 100% of a 4.3V charge to the battery at 45°C, measuring the voltage value after 60 seconds, and using Ohm's law (R=V/I).

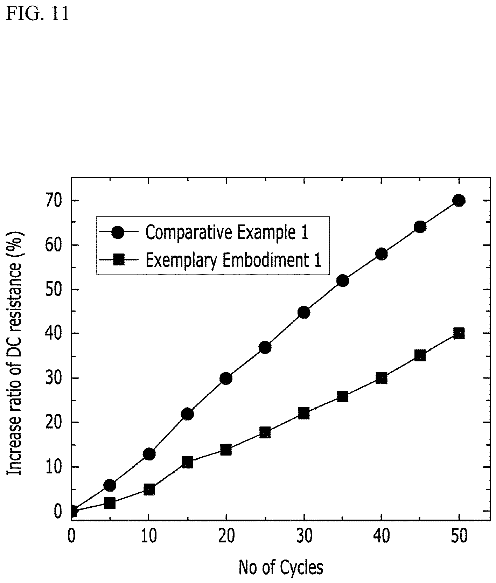

On the other hand, for the cathode active materials of Exemplary Embodiment 1 and Comparative Example 1, a graph comparing high-temperature resistance increase rates is shown in FIG. 11.

Referring to FIG. 11, the cathode active material of Comparative Example 1 exhibited a resistance increase rate of 70% compared to the initial resistance after being charged and discharged 50 times at a high temperature (45 °C). On the other hand, the resistance increase rate of the cathode active material of Exemplary Embodiment 1 was about 40% even after 50 charging and discharging times, and the cathode active material of Exemplary Embodiment 1 exhibited the resistance increase rate about 30% lower than that of the cathode active material of Comparative Example 1. Therefore, it can be found that the cathode active material of Exemplary Embodiment 1 also exhibits very excellent result in terms of resistance increase rate.

(Table 2)

| | Classification | Particle hardness (MPa) | Porosity (%) | Discharge capacity (mAh/g) | Initial efficiency (%) | 2C output (%) | Capacity retention rate (%) (50 times, 45 °C) | High temperature DC resistance increase rate (%) (50 times, 45 °C) |
|---|---|---|---|---|---|---|---|---|
| Large particle | Comparative Example 1 (not including) | 150 | 6 | 193 | 89 | 86 | 96 | 70 |
| | Exemplary Embodiment 1 (0.005 mol) | 180 | 2.7 | 195.3 | 90.3 | 88.5 | 99 | 40 |
| | Exemplary Embodiment 3 (0.003 mol) | 181 | 3.6 | 195.2 | 90.2 | 88.3 | 98.7 | 39 |
| | Exemplary Embodiment 4 (0.001 mol) | 167 | 4.5 | 193.5 | 90 | 88 | 98 | 45 |
| | Exemplary Embodiment 5 (0.007 mol) | 182 | 1.8 | 195 | 89.6 | 88.3 | 98.3 | 42 |
| | Exemplary Embodiment 6 (0.01 mol) | 182 | 0.6 | 193 | 89.2 | 87.9 | 98 | 47 |
| Small particle | Comparative Example 2 (not including) | - | 7 | 199.1 | 94.2 | 88.1 | 95.1 | 115 |
| | Exemplary Embodiment 2 (0.0025 mol) | - | 3.4 | 200.8 | 95.4 | 91.5 | 96.4 | 57 |
| | Exemplary Embodiment 7 (0.0015 mol) | - | 4.4 | 200.5 | 95.2 | 91.4 | 96.4 | 58 |
| | Exemplary Embodiment 8 (0.001 mol) | - | 5.6 | 199.8 | 94.6 | 91 | 95.7 | 64 |
| | Exemplary Embodiment 9 (0.005 mol) | - | 2.7 | 200.5 | 95.4 | 91.3 | 96.3 | 59 |
| | Exemplary Embodiment 10 (0.007 mol) | - | 1.7 | 199.5 | 94.7 | 91 | 95.5 | 62 |
| Bimodal | Comparative Example 3 (not including) | - | - | 194.8 | 90.5 | 86.9 | 95.7 | 60 |
| | Exemplary Embodiment 11 (large particle 7: small particle 3) | - | - | 197 | 91.8 | 89.8 | 98.2 | 45.1 |

(continued)

| Classification | | Particle hardness (MPa) | Porosity (%) | Discharge capacity (mAh/g) | Initial efficiency (%) | 2C output (%) | Capacity retention rate (%) (50 times, 45 °C) | High temperature DC resistance increase rate (%) (50 times, 45 °C) |
|---|---|---|---|---|---|---|---|---|
| Large particle | Exemplary Embodiment 12 (no surface layer, 0.005) | 178 | 3.3 | 193 | 90.2 | 88.5 | 98.8 | 45 |
| | Reference Example 1 (prepared by mixing sintered powder + boron powder) | 155 | 2.7 | 192.5 | 89 | 85.5 | 96.5 | 90 |
| | Reference Example 2 (0.0005) | 170 | 5 | 193.6 | 89.3 | 87.2 | 97.4 | 58 |
| | Reference Example 3 (0.015) | 176 | 1.3 | 190 | 88.1 | 87 | 96.4 | 63 |
| | Comparative Example 4 (D50 of 1.7 μm, 0.005) | 154 | 4.8 | 192 | 89.1 | 86.3 | 93.2 | 76 |

Referring to Table 2, the particle hardness of the large particle diameter cathode active material prepared according to each of Exemplary Embodiments 1, 3 to 6, and 12, in which the coating layer including the boron compound was formed on the surface of the primary particle was significantly improved compared to that of Comparative Example 1 in which no coating layer including a boron compound was formed. In addition, it can be seen that the initial efficiency, 2C output, capacity retention rate, and high temperature resistance increase rate were all improved.

However, it can be seen that, among the cathode active materials having large particles, the cathode active material prepared according to each of Reference Examples 2 and 3 in which the coating layer containing the boron compound was formed on the surface of the primary particle but the content of the boron compound contained in the secondary particle is outside the range of 0.001 mol to 0.01 mol has excellent electrochemical characteristics such as the output characteristic, capacity retention rate, and high temperature resistance characteristic than those of Comparative Example 1, but has somewhat inferior electrochemical characteristics compared to Exemplary Embodiments.

Further, it can be seen that the small particle diameter cathode active material prepared according to each of Exemplary Embodiments 2 and 7 to 10, in which the coating layer containing the boron compound was formed on the surface of the primary particle, also improved all the initial efficiency, 2C output, capacity retention rate, and high temperature resistance increase rate compared to Comparative Example 2 in which no coating layer containing a boron compound was formed on the surface of the primary particle.

In addition, in the case of Exemplary Embodiment 11 and Comparative Example 3 in which the cathode active materials were prepared in a bimodal form, it can be seen that all the electrochemical characteristics of the cathode active material of Example 11 in which the coating layer containing the boron compound was formed on the surface of the primary particle were excellent compared to Comparative Example 3 in which no coating layer was formed.

Unlike Exemplary Embodiments in which the coating layer forming materials were mixed before firing after the precursor was prepared and the positive electrode active material was prepared after firing, it can be seen that Reference Example 1, in which the positive electrode active material was prepared by mixing boric acid after manufacturing the fired powder, has significantly low particle hardness and significantly increased electrochemical characteristics, particularly, high temperature resistance, so that the battery performance is very poor.

Then, Comparative Example 4, in which the cathode active material was prepared using the coating layer forming material having an average particle diameter (D50) of $Li_3BO_3$ of 1.7 $\mu$m, exhibited the result that the particle hardness was remarkably low, and electrochemical characteristics such as the output characteristic, capacity retention rate, and high temperature resistance characteristic were also very bad.

Accordingly, it can be seen that the cathode active material in which the coating layer including the boron compound was formed on the surface of the primary particle as in the present exemplary embodiment may greatly improve the battery performance even when implemented in any form of large particle diameter, small particle diameter, and bimodal.

**(Experimental Example 6) TEM structure analysis**

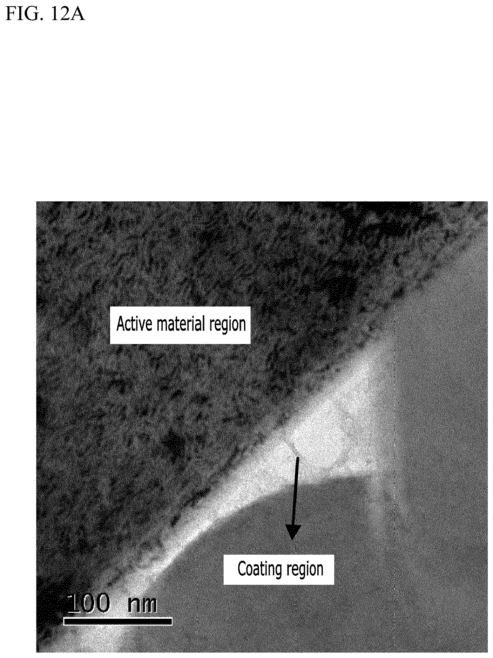

TEM structure analysis was performed on the surface of the primary particles of the cathode active material prepared according to Exemplary Embodiment 1, and the result is shown in FIG. 12A. The TEM structure analysis was performed using a spherical aberration-corrected transmission electron microscope (Cs-Corrected Transmission Electron Microscopy, JEOL, JEM-ARM200F, x20K, 200kV) to analyze crystallinity.

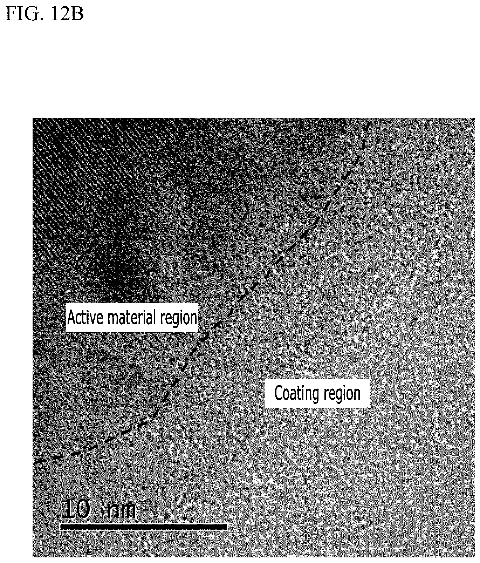

For a closer observation, FIG. 12B shows an enlarged view of a region in which the primary particle of the cathode active material and the coating layer positioned on the surface of the primary particle coexisted in FIG. 12A. Referring to FIG. 12B, in the primary particle region, in other words, an active material region, a constant oblique pattern such as a comb pattern is observed, and thus it can be confirmed that a layered crystal structure appears. On the other hand, the coating layer positioned on the surface of the primary particle, in other words, a coating region, has a random pattern without a constant pattern, and thus it can be confirmed that an amorphous structure is included.

The present invention is not limited to the exemplary embodiments and may be manufactured in various different forms, and it will be understood by those skilled in the art to which the present invention pertains that the present invention can be implemented as different specific forms without changing the technical spirit or essential features of the present invention. Therefore, it should be understood that the exemplary embodiments described above are illustrative in all respects and not restrictive.

**Claims**

1. A cathode active material, wherein:

   the cathode active material is a lithium metal oxide particle in the form of a secondary particle comprising a primary particle,
a coating layer comprising a boron compound is positioned on at least a portion of a surface of the primary particle, and
the boron compound includes an amorphous structure.

2. The cathode active material
of claim 1, wherein:
the boron compound comprises Li and B.

3. The cathode active material
of claim 1, wherein:
the primary particle comprising the boron compound on at least the portion thereof is positioned inside the lithium metal oxide particle.

4. The cathode active material
of claim 1, wherein:
a particle hardness of the lithium metal oxide particle is in the range of 151 MPa to 200 MPa.

5. The cathode active material
of claim 1, wherein:
porosity of the lithium metal oxide particle represented by the following equation 1 is in the range of 0.3% to 7%.

[Equation 1]

Porosity (%) = (pore area of lithium metal oxide particle cross-section A /

area of lithium metal oxide particle cross-section A) × 100

(In Equation 1, A is the area of the cross-section including the diameter of the lithium metal oxide particle.)

6. The cathode active material
of claim 1, wherein:
an average particle diameter (D50) of the primary particle increases in the range of 1.3 times to 2.5 times compared to a case where no coating layer including a boron compound is positioned on at least a portion of a surface of the primary particle although fired at the same temperature.

7. The cathode active material
of claim 6, wherein:
the average particle diameter (D50) of the primary particle is in the range of 0.3 $\mu$m to 2 $\mu$m.

8. The cathode active material
of claim 1, wherein:

the cathode active material is a plurality of the lithium metal oxide particles, the plurality of lithium metal oxide particles being at least one of
large particles having an average particle diameter (D50) in the range of 10 $\mu$m to 30 $\mu$m,
small particles having an average particle diameter (D50) in the range of 1 $\mu$m to 6 $\mu$m, and
bimodal particles in which the large particles and the small particles are mixed.

9. The cathode active material
of claim 8, wherein:

a full width at half maximum FWHM$_{(110)}$ of a diffraction peak of the (110) plane by X-ray diffraction of the large particles is 0.14° to 0.18°, and
a full width at half maximum FWHM$_{(110)}$ of a diffraction peak of the (110) plane by X-ray diffraction of the small particles is 0.15° to 0.19°.

**10.** The cathode active material
of claim 1, wherein:
the boron compound comprises at least one of $Li_3BO_3$, $LiBO_2$, $Li_3B_3O_5$, $Li_6B_4O_9$, $Li_{6.52}B_{18}O_{0.7}$, $Li_{7.4}B_{18}O_{0.7}$, $Li_{7.8}B_{18}O_{0.9}$, and $Li_2B_4O_7$.

**11.** The cathode active material
of claim 1, wherein:
the content of the boron compound in the secondary particle is 0.001 mol to 0.01 mol.

**12.** The cathode active material
of claim 1, wherein:
the content of nickel in metal in the secondary particle is 0.65 mol to 0.99 mol.

**13.** The cathode active material
of claim 1, wherein:
the lithium metal oxide further comprises at least one of Al and Zr in the secondary particle.

**14.** The cathode active material
of claim 1, further comprising:
a surface layer positioned on a surface of the lithium metal oxide particle.

**15.** The cathode active material
of claim 14, wherein:
the surface layer comprises at least one selected from the group consisting of B, Zr, Al, W, Nb, P, Ce, Ti, Ta, Co, Si, and Mn.

**16.** A method for manufacturing a cathode active material, the method comprising:

preparing a coating layer forming material comprising a boron compound;
obtaining a metal precursor by adding an aqueous metal salt solution in a co-precipitation reactor; and
obtaining a cathode active material by mixing and firing the coating layer forming material, the metal precursor, and a lithium raw material,
wherein the coating layer forming material is provided as a particulate powder.

**17.** The method
of claim 16, wherein:
an average particle diameter of the particulate powder is 0.1 $\mu$m to 1.5 $\mu$m.

**18.** The method
of claim 16, wherein:
the preparing of the coating layer forming material comprising the boron compound comprises:
mixing and firing raw materials constituting the boron compound; and pulverizing the fired sintered product.

**19.** The method
of claim 16, wherein:

the obtaining of the cathode active material comprises:
preparing a sintered body by mixing and firing the coating layer forming material, the metal precursor, and the lithium raw material; and
forming a surface layer positioned on a surface of the sintered body.

**20.** A lithium secondary battery comprising:

a cathode comprising the cathode active material of any one of claims 1 to 15;
an anode comprising an anode active material; and
an electrolyte positioned between the anode and cathode.

FIG. 1

Li$^+$

Li ion
conducting
material

FIG. 2

FIG. 3A

Li3BO3

FIG. 3B

FIG. 3C

FIG. 4A

FIG. 4B

FIG. 5

FIG. 6

FIG. 7

FIG. 8

FIG. 9

FIG. 10

FIG. 11

FIG. 12A

FIG. 12B

## INTERNATIONAL SEARCH REPORT

| International application No. |
| --- |
| **PCT/KR2020/010795** |

### A. CLASSIFICATION OF SUBJECT MATTER

**H01M 4/36**(2006.01)i; **H01M 4/525**(2010.01)i; **H01M 4/505**(2010.01)i; **H01M 4/62**(2006.01)i; **H01M 10/052**(2010.01)i; **C01G 53/00**(2006.01)i; **C01B 35/12**(2006.01)i

According to International Patent Classification (IPC) or to both national classification and IPC

### B. FIELDS SEARCHED

Minimum documentation searched (classification system followed by classification symbols)

H01M 4/36; H01M 10/052; H01M 10/0525; H01M 4/131; H01M 4/485; H01M 4/505; H01M 4/525; H01M 4/62; C01G 53/00; C01B 35/12

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 리튬(lithium), 보론(boron), 코팅(coating), 양극 활물질(cathode active material), 입자 강도(particle strength), 입경(diameter), 바이모달 입자(bimodal particle)

### C. DOCUMENTS CONSIDERED TO BE RELEVANT

| Category* | Citation of document, with indication, where appropriate, of the relevant passages | Relevant to claim No. |
| --- | --- | --- |
| X<br><br>Y | KR 10-2019-0079526 A (LG CHEM, LTD.) 05 July 2019. See paragraphs [0026]-[0038], [0040]-[0055], [0074], [0078]-[0099], [0101]-[0109] and [0120]; and examples 1-3 and figure 2a. | 1-3,6,7,10-15,20<br><br>4,5,8,9,16-19 |
| Y | KR 10-2019-0013674 A (ECOPRO BM CO., LTD. et al.) 11 February 2019. See paragraphs [0009]-[0014] and [0018]-[0020]. | 4,5 |
| Y | KR 10-2015-0092258 A (UMICORE et al.) 12 August 2015. See paragraphs [0001] and [0040]. | 8,9 |
| Y | KR 10-2018-0084673 A (SAMSUNG ELECTRONICS CO., LTD. et al.) 25 July 2018. See paragraphs [0061], [0073] and [0141]-[0158]. | 16-19 |

☑ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **04 December 2020** | **07 December 2020** |

| Name and mailing address of the ISA/KR | Authorized officer |
| --- | --- |
| **Korean Intellectual Property Office**<br>**Government Complex Daejeon Building 4, 189, Cheongsa-ro, Seo-gu, Daejeon, Republic of Korea**<br>**35208** | |
| Facsimile No. **+82-42-481-8578** | Telephone No. |

Form PCT/ISA/210 (second sheet) (July 2019)

**INTERNATIONAL SEARCH REPORT**

International application No.

**PCT/KR2020/010795**

**C.    DOCUMENTS CONSIDERED TO BE RELEVANT**

| Category* | Citation of document, with indication, where appropriate, of the relevant passages | Relevant to claim No. |
|-----------|-----------------------------------------------------------------------------------|----------------------|
| A | KR 10-2018-0137473 A (POSCO et al.) 27 December 2018. See claims 1-11. | 1-20 |

Form PCT/ISA/210 (second sheet) (July 2019)

**INTERNATIONAL SEARCH REPORT**
Information on patent family members

International application No.

**PCT/KR2020/010795**

| Patent document cited in search report | | | Publication date (day/month/year) | Patent family member(s) | | | Publication date (day/month/year) |
|---|---|---|---|---|---|---|---|
| KR | 10-2019-0079526 | A | 05 July 2019 | None | | | |
| KR | 10-2019-0013674 | A | 11 February 2019 | KR | 10-2019-0020302 | A | 28 February 2019 |
| | | | | KR | 10-2019-0107615 | A | 20 September 2019 |
| | | | | KR | 10-2019-0127617 | A | 13 November 2019 |
| | | | | WO | 2019-027215 | A2 | 07 February 2019 |
| KR | 10-2015-0092258 | A | 12 August 2015 | CN | 105051945 | A | 11 November 2015 |
| | | | | EP | 2932544 | A1 | 21 October 2015 |
| | | | | JP | 2016-506036 | A | 25 February 2016 |
| | | | | KR | 10-1811111 | B1 | 20 December 2017 |
| | | | | TW | 201440303 | A | 16 October 2014 |
| | | | | TW | I508358 | B | 11 November 2015 |
| | | | | US | 10069140 | B2 | 04 September 2018 |
| | | | | US | 2015-0311512 | A1 | 29 October 2015 |
| | | | | WO | 2014-090584 | A1 | 19 June 2014 |
| KR | 10-2018-0084673 | A | 25 July 2018 | CN | 108336331 | A | 27 July 2018 |
| | | | | EP | 3349276 | A2 | 18 July 2018 |
| | | | | US | 2018-0205084 | A1 | 19 July 2018 |
| KR | 10-2018-0137473 | A | 27 December 2018 | KR | 10-1951392 | B1 | 22 February 2019 |

Form PCT/ISA/210 (patent family annex) (July 2019)